# FASCICULE DE BREVET EUROPEEN

(11) **EP 0 696 301 B1**
(45) Date de publication et mention de la délivrance du brevet: **02.12.1998**
(21) Numéro de dépôt: 94915186.4
(22) Date de dépôt: 28.04.1994
(51) Int. Cl.: C08L 33/24, C09J 133/24, B32B 27/08

(54) **LIANT D'ADHESION A MOTIFS GLUTARIMIDES**
KLEBSTOFFBINDEMITTEL AUS GLUTARIMID
ADHESION BINDERS WITH GLUTARIMIDE UNITS

(30) Priorité: 30.04.1993 FR 9305156
(43) Date de publication de la demande: 14.02.1996
(73) Titulaire: ELF ATOCHEM S.A., 92800 Puteaux, Hauts-de-Seine (FR)
(72) Inventeur: LOREK, Serge, F-64000 Pau (FR)
(86) Numéro de dépôt international: FR9400488
(87) Numéro de publication internationale: WO9425524

(56) Documents cités:
- EP-A- 0 216 505
- EP-A- 0 354 071
- EP-A- 0 438 239
- DE-A- 2 715 185

## Description

### DOMAINE TECHNIQUE

La présente invention concerne un liant d'adhésion à motifs glutarimides et son application comme matériau barrière. Elle concerne plus particulièrement la coextrusion avec une couche ou un film de polymère fluoré et notamment de polyfluorure de vinylidène (PVDF).

### TECHNIQUE ANTERIEURE

EP 3.449 décrit la coextrusion du PVDF avec des polyuréthannes (PU) ; il n'est pas nécessaire d'utiliser un liant. FR 2.436.676 décrit la coextrusion du PVDF avec le polyméthacrylate de méthyle (PMMA) et un poly(acrylonitrile-butadiène-styrène) (ABS), le film de PMMA étant entre les films de PVDF et d'ABS. Un autre exemple a été fait avec le polychlorure de vinyle (PVC) au lieu de l'ABS.

EP 354 071 et DE 2 715 185 décrivent des procédés de traitement pour améliorer l'adhésion du PVDF avec des polymères non compatibles avec lui.

Le procédé de traitement de EP 354 071 consiste à appliquer sur la surface du PVDF destinée à être en contact avec le polymère non compatible de la poudre de PVDF puis de chauffer à au moins 130°C.

Le procédé de traitement de DE 2 715 185 consiste à appliquer sur la surface du PVDF destinée à être en contact avec le polymère non compatible une solution de PU dans un solvant polaire aprotique.

EP 438 239 décrit des copolymères à motifs glutarimide utilisables comme agents de compatibilisation des mélanges d'au moins deux polymères incompatibles et non comme liants d'adhésion. EP 450.994 décrit un perfectionnement de la technique précédente qui utilise comme liant de coextrusion le mélange :
- 27 à 50 parties de PMMA,
- 73 à 50 parties d'un produit constitué lui même pour 100 parties de 35 à 50 parties de PVDF et
- 65 à 50 parties d'élastomère acrylique ou méthacrylique.

Ce perfectionnement augmente l'adhérence du PVDF sur l'ABS.

Cependant, il n'existe pas de liant de coextrusion satisfaisant pour coller un film de PVDF sur du polyamide ou sur un produit à base de polyamide.

### EXPOSE DE L'INVENTION

Ainsi, l'invention concerne l'utilisation d'un polymère A qui contient les motifs suivants : 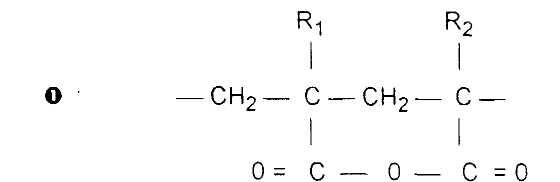 dans lequel R₁ et R₂ identiques ou différents représentent H ou un alkyl linéaire ou ramifié ayant de 1 à 20 atomes de carbone 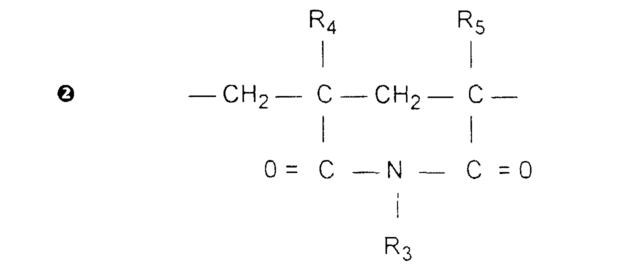 dans lequel (i) R₄ et R₅ identiques ou différents représentent H ou un alkyl linéaire ou ramifié ayant 1 à 20 atomes de carbone, (ii) R₃ représente H, un alkyle, cycloalkyle, aryle, alkaryle, aralkyle ou un hétérocycle 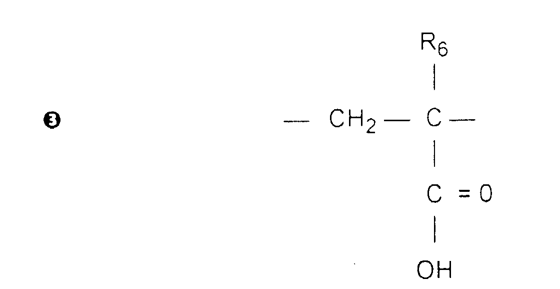 dans lequel R₆ représente H ou un alkyl linéaire ou ramifié ayant de 1 à 20 atomes de carbone 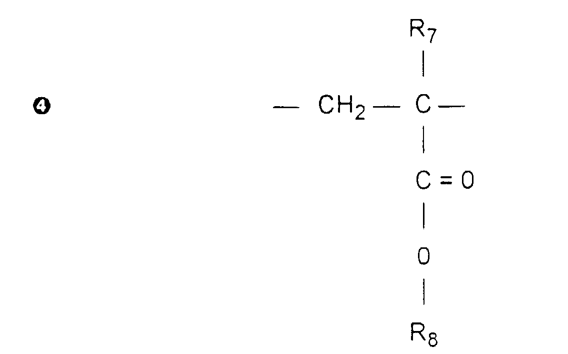 dans lequel R₇ représente H ou un alkyl linéaire ou ramifié ayant de 1 à 20 carbones et R₈ représente un alkyl linéaire ou ramifié ayant de 1 à 20 atomes de carbone, comme liant d'adhésion de polymère fluoré, de préférence du polyfluorure de vinylidène (PVDF) permettant de le faire adhérer aux polymères qui lui sont incompatibles. Le polymère A peut être par exemple un dérivé du PMMA. On peut l'obtenir par réaction du PMMA avec l'ammoniac ou des amines. D'autres polymères A et leurs procédés de préparation sont décrits dans EP 216.505. Les motifs 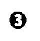 représentent de 1 à 6 % en poids du copolymère A.

Parmi les polymères fluorés selon l'invention, on peut citer :
- les homo- et copolymères du fluorure de vinylidène (VF2),
- les homo- et copolymères du trifluoroéthylène (VF₃)
- les homo- et copolymères, et notamment terpolymères, associant des restes des motifs chlorotrifluoroéthylène (CTFE), tétrafluoroéthylène (TFE),
hexafluoropropène (HFP) et/ou éthylène et éventuellement des motifs VF2 et/ou VF3. A titre d'exemple, on peut citer le polytétrafluoroéthylène (PTFE), le poly(éthylène-tétrafluoroéthyléne) (ETFE).

Par polymère fluoré, on entend également des mélanges d'au moins 70% en poids des précédents avec d'autres polymères.

Parmi les polymères fluorés, on utilise avantageusement les homo- et copolymères de fluorure de vinylidène possédant au moins 70 % en poids de restes VF2, désignés dans tout le texte par PVDF. On entend également par PVDF les mélanges des précédents à au moins un autre polymère thermoplastique, à condition qu'au moins 50 % en poids de motifs VF2 soit présent dans le mélange.

Parmi les polymères incompatibles avec les polymères fluorés, notamment le PVDF, on peut citer par exemple les polyamides, les copolyamides, les alliages de polyamides, seuls ou en mélange. A titre d'exemples de polyamides (PA), on peut citer les PA-4,6, PA-6,6, PA-6, PA-6,12, PA-11, PA-12 et PA-12,12 ou leurs mélanges. Les alliages de polyamides peuvent être ceux constitués d'une matrice polyamide dans laquelle sont dispersées des particules d'un autre polymère tels que ceux décrits dans le brevet US 4,174,358. Les polyamides peuvent contenir des plastifiants. L'invention concerne aussi des mélanges du polymère A avec un polymère pour abaisser son module d'élasticité. En effet, le liant constitué du polymère A est parfois trop rigide pour certaines applications, il est alors utile de le mélanger avec un autre polymère pour le rendre moins rigide. On choisit la quantité de ce polymère selon la rigidité souhaitée. On peut utiliser du polymère fluoré modifié par des élastomères ou un polymère compatible avec le polymère A. Le liant selon l'invention peut s'utiliser comme liant de coextrusion.

L'invention concerne aussi le matériau à trois couches, à savoir successivement une couche de polymère fluoré, une couche du liant selon l'invention et une couche d'un polymère incompatible avec le polymère fluoré. Ces couches peuvent être des plaques ou des films ; elles peuvent être planes ou cylindriques. Ce sont par exemple des tuyaux ou des tubes. De préférence, le polymère incompatible avec le polymère fluoré est un polyamide, un copolyamide ou un alliage de polyamide. Ce matériau à trois couches peut être préparé par les techniques usuelles de coextrusion ou de surmoulage. On peut préparer le matériau tricouche par coextrusion directe ou bien par exemple extruder la couche de polymère fluoré puis venir en reprise extruder ou coextruder la couche de liant et la couche de polymère incompatible sur la couche de polymère fluoré. On ne sortirait pas du cadre de l'invention si le matériau comportait d'autres couches ; par exemple sur la couche de polymère fluoré on pourrait avoir une couche de polyuréthanne, c'est-à-dire que l'on aurait dans l'ordre PA/liant à base du polymère A/polymère fluoré/PU. On pourrait avoir aussi sur la couche de polymère fluoré un autre liant, par exemple celui décrit dans EP 450 994 puis une couche d'ABS, c'est-à-dire que l'on aurait dans l'ordre PA/liant à base du polymère A/polymère fluoré/liant/ABS. Il est clair que l'on pourrait également avoir plusieurs fois le liant de l'invention, c'est-à-dire que l'on aurait dans l'ordre PA/liant à base du polymère A/polymère fluoré/liant à base du polymère A/PA. Une forme particulièrement intéressante de ce matériau est un tube dont la couche extérieure est en polyamide et la couche intérieure en polymère fluoré, et de préférence en PVDF. Ce tube est utile pour l'alimentation en essence des moteurs d'automobiles.

Pour des raisons de sécurité et de préservation de l'environnement, les constructeurs automobiles imposent aux tubes d'essence des caractéristiques mécaniques : résistance et flexibilité, et des caractéristiques de résistance accrue à la perméabilité. Les tubes doivent être le moins perméable possible aux produits pétroliers et à leurs additifs, en particulier le méthanol.

Actuellement, les tubes de polyamide sont couramment utilisés dans l'industrie automobile. Les polyamides représentent un matériau idéal pour cette application de tube, leur résistance mécanique étant excellente et leur flexibilité étant suffisante pour qu'un tube supporte, sans casser, durant pratiquement toute la vie d'un véhicule, l'accumulation de mouvements de flexion. Ces tubes en polyamide ne répondent plus aux nouvelles exigences des constructeurs automobiles en ce qui concerne la perméabilité. Avec la présence, de plus en plus développée, de méthanol dans l'essence, la sensibilité des tubes en polyamide se manifeste par un gonflement du tube entraînant une diminution des propriétés mécaniques et des modifications dimensionnelles.

Pour remédier à cet inconvénient, tout en conservant les effets mécaniques des polyamides, l'objet de l'invention consiste à gainer la paroi interne du tube de polyamide d'une couche de polymère fluoré, de préférence de PVDF. La couche de polymère fluoré est de préférence la plus fine possible afin de conserver au maximum la flexibilité du polyamide, sachant que les polymères fluorés et notamment le PVDF, ne sont pas particulièrement réputés pour leurs propriétés en souplesse.

De façon recommandée, les tubes à base de polyamide pour l'alimentation en essence des moteurs possédant généralement un diamètre externe de 6 à 12 mm, l'épaisseur de la couche interne de polymère fluoré, de préférence de PVDF, est comprise entre 10 µm et 1 mm et celle du polyamide comprise entre 0,8 et 1,8 mm, une couche intermédiaire de liant d'adhésion entre le polyamide et le polymère fluoré de 10 µm à 1 mm complétant le tube.

II est indispensable que le polymère fluoré soit lié de façon efficace au polyamide. Un tube qui ne présente pas de liaison entre le polymère fluoré et le polyamide ne peut posséder une bonne flexibilité et par conséquent ne peut être plié ou coudé facilement par formage à chaud ; dans ce cas, le matériau le plus mince forme des plis au cours de l'opération.

Par ailleurs, si les deux couches n'adhèrent pas entre elles, la condensation éventuelle des gaz entre les deux couches, au cours du temps, peut entraîner la déformation de la partie du tube la plus mince. En outre, les tubes étant reliés entre eux, ainsi qu'au réservoir d'essence et au carburateur par des raccords, ceux-ci ne peuvent assurer l'étanchéité s'ils s'appuient sur deux couches dissociées. Enfin, dans le cas où l'épaisseur de la couche de polymère fluoré, à l'intérieur du tube, est très mince, par exemple de 10 à quelques dizaines de µm, et sans adhésion, une dépression dans le tube déforme de façon irréversible le film de polymère fluoré rendant le tube inutilisable.

Il est constaté qu'un tube constitué d'une couche interne de polymère fluoré liée par le liant d'adhésion selon l'invention à une couche externe de polyamide permet de diminuer d'un facteur 10 la perméabilité par rapport à celle d'un tube équivalent en polyamide, tout en conservant les autres propriétés, telles que la résistance au choc à froid, dans les limites des cahiers des charges des constructeurs automobiles.

Selon une autre forme de l'invention, le tube d'essence peut être formé d'une couche centrale de polymère fluoré, de préférence PVDF, avec, de chaque côté, une couche du liant de l'invention et une couche de polyamide, c'est-à-dire que le tube a 5 couches : PA/liant à base de polymère A/polymère fluoré/liant à base de polymère A/PA.

On ne sortirait pas du cadre de l'invention si la (ou les) couche de polyamide comprenait ou était essentiellement constituée de tubes rebroyés, c'est-à-dire des lots de tubes à base de polyamide et notamment des structures multicouches selon l'invention, broyés et éventuellement mélangés au polyamide. On peut aussi mettre ces rebroyés en couche intermédiaire entre le liant et le PA.

Des modes de réalisation préférés de l'invention sont décrits dans les revendications 6, 9 et 10.

De préférence, pour les tubes à essence, le liant à base de polymère A est mélangé avec du polymère fluoré et/ou du polymère fluoré modifié par un élastomère ou plastifié, et éventuellement un élastomère compatible avec A, comme cité précédemment, pour le rendre moins rigide. Lorsqu'on réalise une structure multicouche selon l'invention dont le liant à base de polymère A contient également du polymère fluoré, on préfère que le polymère fluoré présent dans le liant soit le même que celui qui se trouve dans la couche de polymère fluoré adjacente.

Le liant peut être constitué d'au moins 10 % en poids de polymère A, le reste étant du polymère fluoré, de préférence PVDF, et un modifiant choc. On a utilisé avec succès des formules contenant (en % poids).
- 12 à 20 % de polymère A,
- 30 à 60 % de PVDF,
- 20 à 40 % d'élastomère MBS,
le total étant de 100 %.

On désigne par MBS des modifiants chocs qui se présentent sous forme de particules ayant un coeur en caoutchouc styrène/butadiène et une enveloppe en acrylique/styrène.

Les tubes d'essence ainsi fabriqués possèdent une résistance exceptionnelle aux alcools, aux essences alcoolisées et à la chaleur.

La demanderesse a découvert aussi que des mélanges de Polymère A et de polymère fluoré étaient des liants d'adhésion et simultanément, des matériaux barrière à l'essence, en particulier l'essence alcoolisée. On peut aussi obtenir des tubes d'essence constitués d'une couche de ce liant entre deux couches de polyamide ; on peut avantageusement, au lieu de polymère fluoré, utiliser du polymère fluoré modifié par des élastomères ou ajouter au liant de base (Polymère A et polymère fluoré) du polymère fluoré ainsi modifié et/ou un polymère compatible avec le polymère A.

### MANIERES DE REALISER L'INVENTION

Les exemples suivants illustrent l'invention sans toutefois la limiter.

Dans ces exemples, les polymères incompatibles avec les polymères fluorés (homo- et copolymère de VF2) sont des polyamides.

Les composites PVDF / Liant / PA sont des tubes, mais pourraient être des films,des bidons ou des réservoirs.

Ces tubes sont produits par coextrusion.

Cette technologie est décrite dans de nombreux ouvrages scientifiques (par exemple dans "Plastics Extrusion Technology", Edité par F. Hensen, 1988, 738 pages, ISBN: 0-19-520760-2). La ligne de coextrusion utilisée permet de produire indifféremment des tubes comportant 1, 2, 3, 4 ou 5 couches. Les tubes produits sont calibrés aux dimensions suivantes : diamètre extérieur 8 mm et diamètre intérieur 6 mm.

La norme utilisée pour juger de la résilience des tubes est la norme DIN 53453. Les essais sont menés à - 40°C.

Les essais de perméabilité sont menés selon la méthode "micro SHED test" par recirculation de l'essence-test dans le tubes. Les essences-tests sont :
- le M15, mélange en volume de Méthanol (15%), Isooctane (42.5%) et de Toluène (42.5%). Dans ce cas la recirculation se fait à 50°C sous une pression de 4 bars.
- le TF1, mélange en volume d'Ethanol (9%) , Isooctane ( 45.5%) et de Toluène (45.5%). Dans ce cas la recirculation se fait à 40°C sous une pression de 2 bars.

Les tests de pelage sur tubes (adhésion entre les couches de la structure multicouche) sont effectués sur un dynamomètre à une vitesse de 200 mm/min et pour une angle de pelage de 180°. L'adhésion est mesurée en g/cm. On utilise la correspondance suivante :

| | |
|---|---|
| Adhésion Interfaciale > 10000 g/cm (Structure Indélaminable) | ++++ |
| 6000 g/cm < Adhésion Interfaciale < 10000 g/cm | +++ |
| 2000 g/cm < Adhésion Interfaciale < 6000 g/cm | ++ |
| Adhésion Interfaciale < 2000 g/cm | 0 |

### EXEMPLES

**Tableau 1 :**

| Tubes monocouche en Polyamide ; ceci constitue la référence. | | | |
|---|---|---|---|
| | **Perméabilité M15 (g/m**^{**2**}**/24h)** | **Perméabilité TFI (g/m**^{**2**}**/24h)** | **Choc DIN à -40°C** |
| Polyamide #1 | | 69.7 | 0C/10 |
| Polyamide #2 | 420 | 137.0 | 0C/10 |

Le Polyamide #1 est un PA-12 plastifié par 7.5% en masse de n-Butyl Benzène Sulfonamide (BBSA), présentant un module de flexion de 450 MPa (Norme ISO 178) et une résilience au choc Charpy avec entaille de 9 kJ/m² à -40°C (Norme ISO 179).

Le Polyamide #2 est un PA-11 plastifié par 13% en masse de BBSA, présentant un module de flexion de 350 MPa (Norme ISO 178).

0C/10 = Aucune casse sur 10 essais selon la norme.

**Tableau 1 bis :**

| Tube monocouche en PVDF | |
|---|---|
| | **Choc DIN à -40°C** |
| PVDF#1 | 10C/10 |

Le PVDF #1 est un homopolymère de Fluidité 13 g / 10 min à 230°C sous 5 kg (Norme ISO1133). Cet exemple illustre la faible résilience du PVDF par rapport au PA.

**Tableau 2 :**

| Tubes multicouche avec couche interne de PVDF. | | | | |
|---|---|---|---|---|
| **Ex** | **Structure du Tube** | **Perméabilité M15 (g/m**^{**2**}**/24h)** | **Perméabilité TFI (g/m**^{**2**}**/24h)** | **Choc DIN à -40°C** |
| 1 | Polyamide #2 / Liant #1 / PVDF #1 (700µm / 80µm / 220µm) | 30 | 1.4 | 0C/10 |
| 2 | Polyamide #2 / Liant #1 / PVDF #1 (820µm / 60µm / 120µm) | | 2.6 | 0C/10 |
| 3 | Polyamide #2 / Liant #1 / PVDF #3 (750µm / 50µm / 150µm) | | 3.8 | 0C/10 |
| 4 | Polyamide #2 / Liant #2 / Polyamide #1 (700µm / 100µm / 250µm) | | 8.3 | 0C/10 |
| 5 | Polyamide #1 / Liant #3 / Polyamide #1 (410 µm / 150 µm / 410 µm) | 70 | 5.7 | 0C/10 |
| 6 | Polyamide #1 / Matériau Rebroyé / Liant #1 / PVDF #2 (380 µm / 380 µm / 80µm / 150 µm) | | 3.0 | 0C/10 |
| 7 | Polyamide #2 / Liant #1 / PVDF #1 / PVDF #3 (750µm / 50µm / 100µm / 50µm) | | 3.2 | 0C/10 |
| 8 | Polyamide #1 / Liant #1 / PVDF #2/ Liant #1 / Polyamide #1 (380µm / 65µm / 100µm / 65µm / 380 µm) | | < 5 | 0C/10 |

Le PVDF #2 est un homopolymère de Fluidité 8 g / 10 min à 230°C sous 5 kg (Norme ISO1133).

Le PVDF #3 est un PVDF#1 modifié par 2.5% de Noir de Carbone afin de le rendre conducteur.

Le Liant #1 est un mélange obtenu par extrusion sur extrudeuse double vis d'un PVDF#1 (50% en masse), d'un copolymère de type acrylique-imide comportant des groupements acides dans sa structure et présentant un module de flexion de 4100 MPa (Norme ISO 178) (15%) et d'un modifiant choc type Core-Shell Methyl Méthacrylate Butadiene Styrene (MBS) (35%).

Le Liant #2 est un mélange obtenu par extrusion sur extrudeuse double vis d'un PVDF de Fluidité 2 g / 10 min à 230°C sous 5 kg (Norme ISO1133) (90%) et du même copolymère de type acrylique-imide (10%).

Le Liant #3 est similaire au Liant #2 mais contient plus de copolymère de type acrylique-imide (20%).

Le Matériau Rebroyé de l'Exemple 6, placé entre la couche externe de PA et la couche de Liant #1, correspond au tube de l'Exemple 1 qui a été rebroyé et extrudé sous forme de granulés directement réutilisables comme matière première dans une structure multicouche.
- L'Exemple 1 montre que le tube multicouche est une excellente structure barrière par rapport à un tube monocouche en PA. Le tube possède un excellent comportement au choc.
- L'Exemple 2 montre, par comparaison avec l'Exemple 1, que la propriété barrière est apportée par les couches PVDF + Liant.
- L'Exemple 3 montre que l'utilisation d'un PVDF conducteur n'altère en rien les propriétés barrière et de choc de la structure multicouche. L'utilisation d'un PVDF conducteur est utile si l'on veut obtenir un tube essence antistatique.
- Les Exemples 4 et 5 montrent que le liant lui même est un très bon matériau barrière et qu'une structure où la couche barrière est en position médiane résiste bien au choc à froid.
- L'Exemple 6 montre que l'on peut introduire une couche de matériau rebroyé entre la couche de PA et la couche de Liant sans nuire aux performances en choc et en perméabilité.
- L'Exemple 7 montre qu'une structure quatre couches antistatique peut être obtenue grâce à l'utilisation d'une couche conductrice se trouvant à l'intérieur de la couche principale de PVDF.
- L'Exemple 8 montre qu'une structure symétrique 5 couches est également un bonne solution du point de vue des propriétés en choc et en perméabilité.

**Tableau 3 :**

| Adhésion Interfaciale dans les tubes. | | | |
|---|---|---|---|
| Ex | **Structure du Tube** | **Adhésion (g/cm) du liant avec** | |
| | | **Face Externe** | **Face Interne** |
| 9 | Polyamide #2 / Liant #1 / PVDF #1 | ++++ | ++++ |
| 10 | Polyamide #2 / Liant #3 / Polyamide #2 | ++++ | ++++ |

Les Exemples 9 et 10 montrent que les tubes coextrudés ont une adhésion parfaite entre les couches.

**Tableau 3 bis :**

| Adhésion Interfaciale pour films et plaques. | | | |
|---|---|---|---|
| **Ex** | **Structure du Film Tricouche** | **Adhésion (g/cm) du liant avec** | |
| | | **Face Externe** | **Face Interne** |
| 11 | Polyamide #1 / Liant #1 / Copolymère Fluoré (200µm /100µm /200µm) | ++++ | ++++ |

Le copolymère fluoré est un copolymère de VF2 (90% molaire) et de VF3 (10%) obtenu par un procédé suspension. Les films servant à l'essai sont obtenus par extrusion au travers d'une filière appropriée. Le film tricouche est obtenu par pressage des films sur une presse de laboratoire à plateaux à 230°C pendant 60 s.

L'Exemple 11 montre que les tubes coextrudés ont une adhésion parfaite entre les couches.

**Tableau 4 :**

| | |
|---|---|
| Le tube testé est une structure Polyamide #2 / Liant #1 / PVDF #1. Des tronçons de tubes sont immergés pendant 1000h à 60°C dans le fluide agressif sélectionné. Le test de pelage est effectué immédiatement après immersion. Le pelage est initié à l'interface la plus faible. | |
| Ces Exemples montrent la persistance d'une très bonne adhésion dans des conditions très sévères. | |

| Rétention de l'Adhésion après Exposition à des Fluides Agressifs. | |
|---|---|
| Fluide Agressif de Test | Adhésion |
| Essence Diesel | ++++ |
| Solution à 50% de Chlorure de Zinc | ++++ |
| Fluide de Direction Assistée | ++++ |
| Huile Moteur | ++++ |
| Chlorure de Calcium | ++++ |
| Essence Test E15 (15% d'Ethanol dans de l'essence C) | +++ |
| Essence Test M15 (15% de Méthanol dans de l'essence C) | +++ |
| Solution à 50% d'Ethylène Glycol | ++ |
| Essence C (50% Toluène, 50% Isooctane) | ++ |
| Fluide de Freinage | ++ |

## Revendications

1. Utilisation d'un polymère A contenant les motifs suivants 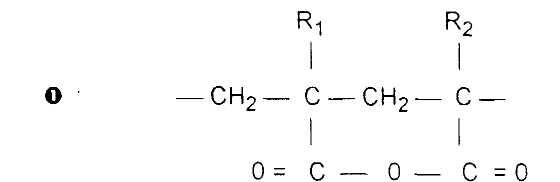 dans lequel R₁ et R₂ identiques ou différents représentent H ou un alkyl linéaire ou ramifié ayant de 1 à 20 atomes de carbone 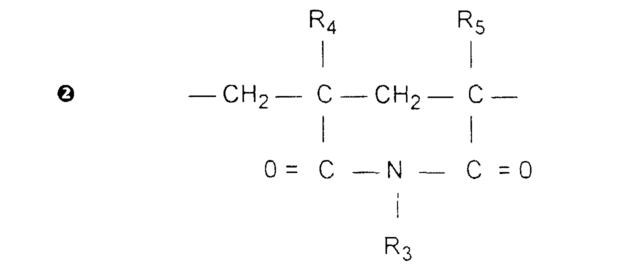 dans lequel (i) R₄ et R₅ identiques ou différents représentent H ou un alkyl linéaire ou ramifié ayant 1 à 20 atomes de carbones, (ii) R₃ représente H, un alkyle, cycloalkyle, aryle, alkaryle, aralkyle ou un hétérocycle, 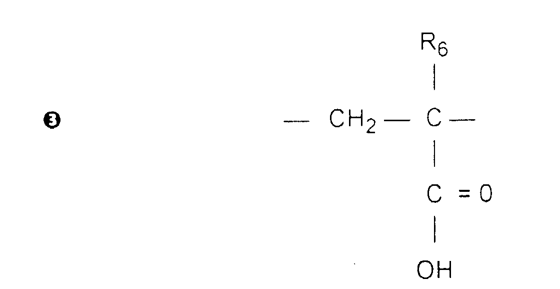 dans lequel R₆ représente H ou un alkyl linéaire ou ramifié ayant de 1 à 20 atomes de carbone 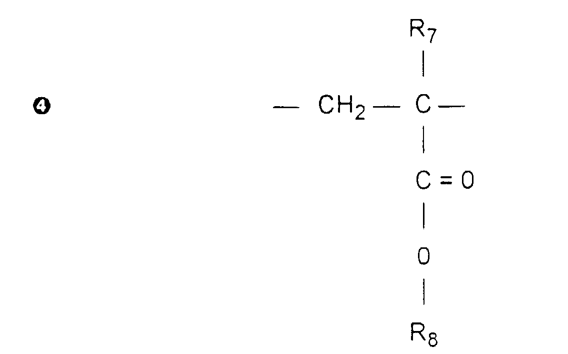 dans lequel R₇ représente H ou un alkyl linéaire ou ramifié ayant de 1 à 20 carbones et R₈ représente un alkyl linéaire ou ramifié ayant de 1 à 20 atomes de carbone avec la condition que les motifs 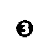 représentent de 1 à 6 % en poids du polymère A, comme liant d'adhésion de polymère fluoré, de préférence du PVDF, permettant de le faire adhérer aux polymères qui lui sont incompatibles.

2. Utilisation d'un polymère A selon la revendication 1, caractérisé en ce qu'il comprend aussi un autre polymère en quantité suffisante pour le rendre moins rigide, de préférence du polymère fluoré, du polymère fluoré modifié ou un polymère compatible avec le polymère A.

3. Matériau multicouche comprenant dans l'ordre une couche de polymère fluoré, de préférence de PVDF, un liant d'adhésion selon l'une des revendications 1 à 2 et une couche de polymère incompatible avec le polymère fluoré.

4. Matériau selon la revendication 3, caractérisé en ce que le polymère incompatible avec le polymère fluoré est du polyamide, un copolyamide, un alliage de polyamides, seuls ou en mélange.

5. Matériau selon l'une des revendications 3 à 4, caractérisé en ce qu'il comprend du côté polymère fluoré :
(i) soit une autre couche de liant selon l'une des revendications 1 à 2 et un autre polymère incompatible avec le polymère fluoré,
(ii) soit une autre couche de polymère compatible avec le polymère fluoré,
(iii) soit une autre couche de liant et un autre polymère incompatible avec le polymère fluoré.

6. Matériau selon l'une des revendications 3 à 5, caractérisé en ce que la ou les couches de polymère incompatible avec le polymère fluoré sont constituées en tout ou en partie du matériau multicouche, selon l'une des revendications 3 à 4, broyé et recyclé.

7. Tube multicouche à base de polyamide, caractérisé en ce qu'il est constitué d'une couche extérieure en polyamide, d'un liant d'adhésion selon la revendication 1 ou 2 et d'une couche intérieure en polymère fluoré, de préférence en PVDF.

8. Tube multicouche à base de polyamide, caractérisé en ce qu'il est constitué d'une couche centrale en polymère fluoré, de préférence en PVDF, avec de chaque côté une couche de liant selon la revendication 1 ou 2, puis une couche de polyamide.

9. Tube multicouche selon la revendication 7 ou 8, caractérisé en ce que l'on remplace tout ou partie du polyamide des couches de polyamide par le matériau multicouche, selon l'une des revendications 3 à 4, broyé et recyclé et/ou que l'on intercale entre le liant et la couche de polyamide une couche du matériau multicouche, selon l'une des revendications 3 à 4, broyé et recyclé.

10. Tube multicouche à base de polyamide, caractérisé en ce qu'il est constitué d'un liant, selon la revendication 1 ou 2, entouré de deux couches de polyamide dont tout ou partie du polyamide est éventuellement remplacé par du matériau multicouche selon l'une des revendications 3 à 4, broyé et recyclé et/ou en ce qu'est intercalé entre le liant et la couche de polyamide une couche faite dudit matériau broyé et recyclé.

## Claims

1. Use of a polymer A containing the following moieties: 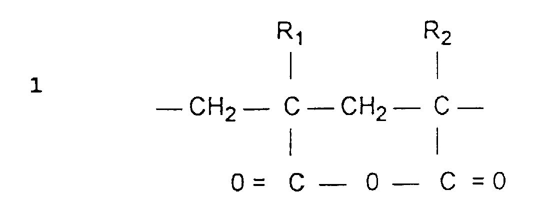 in which R₁ and R₂, which may be identical or different, represent H or a linear or branched alkyl having from 1 to 20 carbon atoms 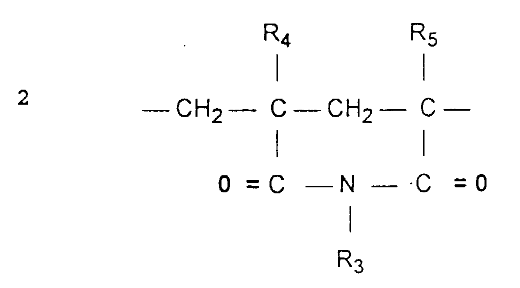 in which (i) R₄ and R₅, which may be identical or different, represent H or a linear or branched alkyl having 1 to 20 carbon atoms, (ii) R₃ represents H, an alkyl, cycloalkyl, aryl, alkaryl, aralkyl or a heterocycle, 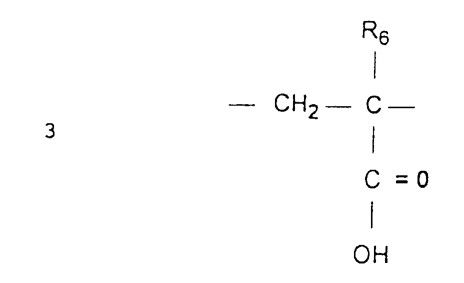 in which R₆ represents H or a linear or branched alkyl having from 1 to 20 carbon atoms 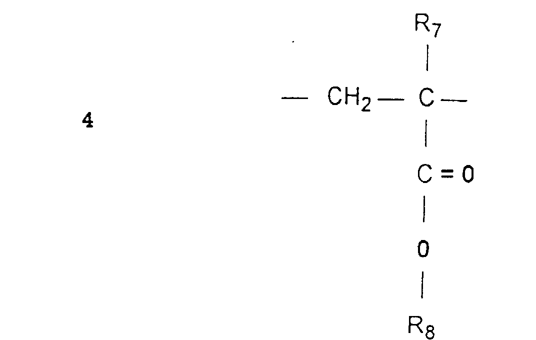 in which R₇ represents H or a linear or branched alkyl having from 1 to 20 carbons and R₈ represents a linear or branched alkyl having from 1 to 20 carbon atoms, on condition that the moieties 3 represent from 1 to 6 % by weight of the polymer A, as adhesion binder for a fluorinated polymer, preferably PVDF, which allows it to adhere to polymers which are incompatible with it.

2. Use of a polymer A according to Claim 1, characterized in that it also comprises another polymer in sufficient quantity to render it less rigid, preferably fluorinated polymer, modified fluorinated polymer or a polymer which is compatible with the polymer A.

3. Multilayer material comprising in order a layer of fluorinated polymer, preferably PVDF, an adhesion binder according to either of Claims 1 and 2 and a layer of polymer which is incompatible with the fluorinated polymer.

4. Material according to Claim 3, characterized in that the polymer which is incompatible with the fluorinated polymer is polyamide, a copolyamide or a polyamide alloy, on their own or as a mixture.

5. Material according to either of Claims 3 and 4, characterized in that it comprises on the fluorinated polymer side:
(i) either another layer of binder according to either of Claims 1 and 2 and another polymer which is incompatible with the fluorinated polymer,
(ii) or another layer of polymer which is compatible with the fluorinated polymer,
(iii) or another layer of binder and another polymer which is incompatible with the fluorinated polymer.

6. Material according to one of Claims 3 to 5, characterized in that the layer or layers of polymer which is incompatible with the fluorinated polymer consist, in total or in part, of the multilayer material according to either of Claims 3 and 4, in ground and recycled form.

7. Multilayer pipe based on polyamide, characterized in that it consists of an outer layer made of polyamide, an adhesion binder according to Claim 1 or 2 and an inner layer made of fluorinated polymer, preferably of PVDF.

8. Multilayer pipe based on polyamide, characterized in that it consists of a central layer made of fluorinated polymer, preferably of PVDF, with, on either side, a layer of binder according to Claim 1 or 2, followed by a layer of polyamide.

9. Multilayer pipe according to Claim 7 or 8, characterized in that all or part of the polyamide of the polyamide layers is replaced by the multilayer material according to either of Claims 3 and 4, in ground and recycled form, and/or in that a layer of the multilayer material according to either of Claims 3 and 4, in ground and recycled form, is inserted between the binder and the layer of polyamide.

10. Multilayer pipe based on polyamide, characterized in that it consists of a binder according to Claim 1 or 2 which is surrounded by two layers of polyamide all or part of the polyamide of which is optionally replaced by multilayer material according to either of Claims 3 and 4, in ground and recycled form, and/or in that a layer made of the said ground and recycled material is inserted between the binder and the layer of polyamide.

## Patentansprüche

1. Verwendung eines Polymers A als Bindemittel zur Adhäsion eines Fluorpolymers, vorzugsweise PVDF, das die Adhäsion von Polymeren hieran ermöglicht, die niit ihm inkompatibel (unverträglich) sind, wobei dieses Polymer A die folgenden Einheitent enthält: 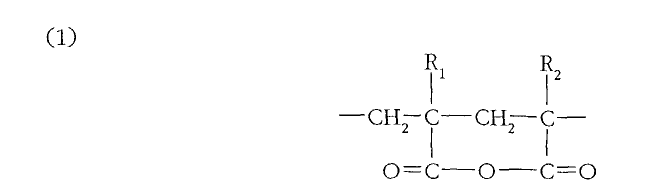 wobei die Reste R₁ und R₂, identisch oder verschieden, Wasserstoff oder einen linearen oder verzweigten Alkylrest mit 1 bis 20 Kohlenstoffatomen darstellen; 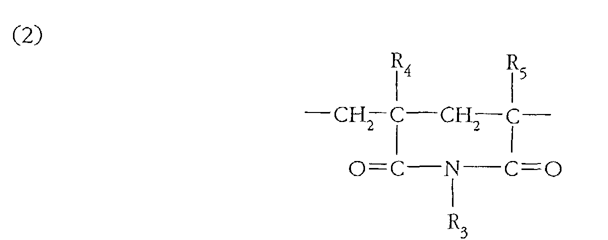 wobei:
(i) die Reste R₄ und R₅, identisch oder verschieden, Wasserstoff oder einen linearen oder verzweigten Alkylrest mit 1 bis 20 Kohlenstoffatomen darstellen;
(ii) der Rest R₃ Wasserstoff oder einen Alkyl-, Cycloalkyl-, Aryl-, Alkaryl-, Aralkylrest oder einen Heterocyclus darstellt; 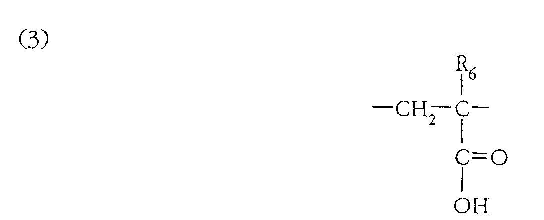 wobei R₆ Wasserstoff oder einen linearen oder verzweigten Alkylrest mit 1 bis 20 Kohlenstoffatomen bezeichnet; 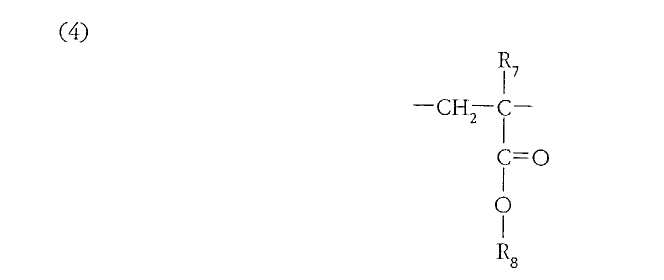 wobei der Rest R₇ Wasserstoff oder einen linearen oder verzweigten Alkylrest mit 1 bis 20 Kohlenstoffatomen darstellt und der Rest R₈ einen linearen oder verzweigten Alkylrest mit 1 bis 20 Kohlenstoffatomen darstellt;
jedoch mit der Maßgabe, daß die Einheit (3) 1 bis 6 Gew.-% des Polymers A darstellt.

2. Verwendung eines Polymers A nach Anspruch 1, dadurch gekennzeichnet, daß es außerdem ein weiteres Polymer in einer Menge enthält, die ausreichend ist, um es weniger starr zu machen, vorzugsweise ein Fluorpolymer, ein modifiziertes Fluorpolymer oder ein mit dem Polymer A kompatibles Polymer.

3. Mehrschichtiges Material, enthaltend der Reihenfolge nach eine Schicht aus fluoriertem Polymer, vorzugsweise PVDF, ein Bindemittel zur Adhäsion nach Anspruch 1 oder 2 und eine Schicht aus einem mit dem Fluorpolymer inkompatiblen (unverträglichen) Polymer.

4. Material nach Anspruch 3, dadurch gekennzeichnet, daß das mit dem Fluorpolymer inkompatible Polymer Polyamid, ein Copolyamid, eine Mischung aus Polyamiden ist, jeweils allein oder in Mischung.

5. Material nach Anspruch 3 oder 4, dadurch gekennzeichnet, daß es neben dem Fluorpolymer
(i) entweder eine weitere Schicht aus einem Bindemittel nach Anspruch 1 oder 2 und ein niit dem Fluorpolymer inkompatibles Polymer; oder
(ii) eine weitere Schicht aus einem mit dem Fluorpolymer kompatiblen Polymer; oder
(iii) eine weitere Schicht aus einem Bindemittel und ein weiteres mit dem Fluorpolymer inkompatibles Polymer
enthält.

6. Material nach einem der Ansprüche 3 bis 5, dadurch gekennzeichnet, daß die Schicht oder Schichten aus dem mit dem Fluorpolymer unverträglichen Polymer ganz oder teilweise aus dem Mehrschichtmaterial nach einem der Ansprüche 3 oder 4 besteht, entweder zerkleinert oder rezykliert.

7. Mehrschichtiger Schlauch auf Polyamidbasis, dadurch gekennzeichnet, daß er aus einer äußeren Schicht aus Polyamid, aus einem Bindemittel zur Adhäsion gemäß Anspruch oder 2 und aus einer inneren Schicht aus fluoriertem Polymer, vorzugsweise PVDF, besteht.

8. Mehrschichtiger Schlauch auf Polyamidbasis, dadurch gekennzeichnet, daß er aus einer zentralen Schicht aus fluoriertem Polymer, vorzugsweise PVDF, besteht, wobei jede Seite eine Bindemittelschicht gemäß Anspruch oder 2 umläßt, auf die eine Polyamidschicht aufgebracht ist.

9. Mehrschichtiger Schlauch nach Anspruch 7 oder 8, dadurch gekennzeichnet, daß man das Polyamid der Polyamidschichten ganz oder teilweise durch ein mehrschichtiges Material nach Anspruch 3 oder 4, zerkleinert oder rezykliert, ersetzt und/oder daß man zwischen dem Bindemittel und der Polyamidschicht eine Schicht aus dem Mehrschichtmaterial nach Anspruch 3 oder 4, zerkleinert oder rezykliert, zwischenschiebt.

10. Mehrschichtiger Schlauch auf Polyamidbasis, dadurch gekennzeichnet, daß er aus einem Bindemittel nach Anspruch 1 oder 2 besteht, das von zwei Polyamidschichten umgeben ist, bei denen das Polyamid ganz oder teilweise gegebenenfalls durch das Mehrschichtmaterial nach Anspruch 3 oder 4, zerkleinert oder rezykliert, ersetzt ist, und/oder daß man zwischen dem Bindemittel und der Polyamidschicht eine Schicht einfügt, die aus dem zerkleinerten oder rezyklierten Material hergestellt ist.
